# EUROPEAN PATENT SPECIFICATION

(11) **EP 0 770 478 B1**
(45) Date of publication and mention of the grant of the patent: **26.03.2003**
(21) Application number: 96116374.8
(22) Date of filing: 12.10.1996
(51) Int. Cl.: B32B 27/08, B32B 27/34

(54) **Multi-layer film**
Mehrschichtfolie
Film multicouche

(30) Priority: 26.10.1995 JP 27896395
(43) Date of publication of application: 02.05.1997
(73) Proprietor: MITSUBISHI GAS CHEMICAL COMPANY, INC., Chiyoda-ku, Tokyo (JP)
(72) Inventor: Harada, Masahiro, c/o Mitsubishi Gas Chem Co, Ltd., Hiratsuka-shi, Kanagawa-ken (JP); Takahashi, Makoto, c/o Mitsubishi Gas Chem Co, Ltd, Hiratsuka-shi, Kanagawa-ken (JP); Maruyama, Katsuya, c/o Mitsubishi Gas Chem Co, Ltd, Hiratsuka-shi, Kanagawa-ken (JP); Murai, Katsuyuki, c/o Mitsubishi Gas Chem Co, Ltd., Hiratsuka-shi, Kanagawa-ken (JP)
(74) Representative: Gille Hrabal Struck Neidlein Prop Roos

(56) References cited:
- EP-A- 0 288 972
- EP-A- 0 530 539
- EP-A- 0 530 549
- DATABASE WPI Section Ch, Week 7916 Derwent Publications Ltd., London, GB; Class A94, AN 79-30407B XP002024418 & JP 54 031 489 A (TOYOBO KK) , 8 March 1979
- DATABASE WPI Section Ch, Week 7404 Derwent Publications Ltd., London, GB; Class A92, AN 74-06298V XP002024419 & JP 48 064 165 A (TOYOBO CO LTD) , 5 September 1973
- PATENT ABSTRACTS OF JAPAN vol. 95, no. 010 & JP 07 256836 A (DAINIPPON PRINTING CO LTD), 9 October 1995,
- PATENT ABSTRACTS OF JAPAN vol. 95, no. 010 & JP 07 256843 A (SUMITOMO BAKELITE CO LTD), 9 October 1995,

## Description

### BACKGROUND OF THE INVENTION

### 1. Field of the Invention

The present invention relates to a gas barrier multi-layer film excellent in shock resistance as a packaging material for food, chemicals, electronic parts, etc.

### 2. Description of the Related Arts

Since polyamides obtained by polycondensation reaction of xylylenediamine with aliphatic dicarboxylic acids, such as a polyamide obtained from meta-xylylenediamine and adipic acid (hereinafter sometimes referred to as "MX nylon"), exhibit a low-permeability to gaseous substances, such as oxygen and carbon dioxide, in recent years, they are used for bottles and oriented films as a gas barrier material. However, the non-oriented film of MX nylon has hardly been used as a packaging material since the non-oriented film of MX nylon is low in shock resistance.

Further, although a coextruded oriented film of MX nylon and a polyolefin is used for food packaging, the coextruded oriented film having that layer structure is not satisfactory in impact strength yet to be used widely as a packaging material.

Japanese Patent Application Laid-Open No. 120168/1992 discloses a technique wherein a blend of MX nylon with an aliphatic polyamide, such as nylon 6, is used for a nonoriented film. However even the film of the blend of MX nylon with nylon 6 is hardly said to have a satisfactory impact resistance for use and, for example, on account of its low impact strength a multi-layer film obtained by the coextrusion of a polyolefin and a blend of MX nylon with nylon 6 has not yet been used widely in the field of packaging except for special applications.

### SUMMARY OF THE INVENTION

An object of the present invention is to provide a film excellent in shock resistance and gas barrier properties as a packaging material for food, chemicals, electronic parts, etc. by solving the above problems.

As a result of intensive investigations, the present inventors have found that a gas barrier nonoriented multi-layer film having a high impact strength not hitherto been attained by any conventional nonoriented films obtained by using MX nylon can be obtained, for example, by arranging a layer of a polyamide 6 or a copolymerized polyamide having a polyamide 6 component as the major component adjacent to both surfaces of an MX nylon layer having excellent gas barrier properties to form a multi-layer film having a specified layer structure. The present invention has been completed based on this finding.

Specifically, the present invention provides: a multi-layer film, comprising layers arranged in the order of layer (A) / layer (B) / layer (A) / layer (C) / layer (D), characterized in that : each layer (A) made of a polyamide 6 type polyamide (a) comprising 70 to 100 mol % of structural units represented by the following formula (1): 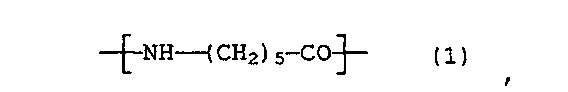 a layer (B) made of a polyamide (b₁) obtained from a diamine comprising 70 mol % or more of meta-xylylenediamine and a dicarboxylic acid comprising 70 mol % or more of an α,ω-aliphatic dicarboxylic acid having 6 to 12 carbon atoms or a mixed polyamide (b₃) comprising 60 % by weight or more of the polyamide (b₁) and 40 % by weight or less of an aliphatic polyamide (b₂), a layer (C) made of an adhesive polyolefin (c₁) or a mixed resin (c₃) of the adhesive polyolefin (c₁) and a polyolefin (c₂), and a layer (D) made of a polyolefin (d), the thickness of the layer (A) being 5 to 80 µm, the thickness of the layer (B) being 5 to 50 µm, and the overall thickness of said multi-layer film being 15 µm or more; and
a multi-layer film comprising layers arranged in the order of layer (A) / layer (B) / layer (A) / layer (E), characterized in the : each layer (A) made of a polyamide 6 type polyamide (a) comprising 70 to 100 mol % of structural units represented by the above formula (1), a layer (B) made of a polyamide (b₁) obtained from a diamine comprising 70 mol % or more of meta-xylylenediamine and a dicarboxylic acid comprising 70 mol % or more of an α,ω-aliphatic dicarboxylic acid having 6 to 12 carbon atoms or a mixed polyamide (b₃) comprising 60 % by weight or more of the polyamide (b₁) and 40 % by weight or less of an aliphatic polyamide (b₂), and a layer (E) made of an adhesive polyolefin (e₁) or a mixed resin (e₃) of the adhesive polyolefin (e₁) and a polyolefin (e₂), the thickness of the layer (A) being 5 to 80 µm, the thickness of the layer (B) being 5 to 50 µm, and the overall thickness of said multi-layer film being 15 µm or more.

### DESCRIPTION OF THE PREFERRED EMBODIMENTS

In the present invention, by "polyamide 6 type polyamide (a)" is meant a polyamide 6 or a copolymerized polyamide having a polyamide 6 component as the major component. Herein, the polyamide having a polyamide 6 component as the major component comprises a polyamide component having at least 70 mol % of recurring units of the above formula (1) derived from ε-caprolactam or ω-aminocaproic acid and, as the other polyamide component, a polyamide component derived from an aliphatic diamine having 4 to 12 carbon atoms and an aromatic dicarboxylic acid, an aliphatic dicarboxylic acid having 4 to 12 carbon atoms or a mixed dicarboxylic acid thereof, a polyamide component derived from a lactam other than ε-caprolactam, and/or the like.

Specific examples of the polyamide (a) are nylon 6, nylon 666 copolymers, copolymerized polyamides of s-caprolactam with hexamethylenediamine, adipic acid, and isophthalic acid, copolymerized polyamides of ε-caprolactam with hexamethylenediamine, adipic acid, terephthalic acid, and isophthalic acid, copolymerized polyamides of ε-caprolactam with hexamethylenediamine, adipic acid and terephthalic acid, and copolymerized polyamides of ε-caprolactam with hexamethylenediamine, terephthalic acid and isophthalic acid.

Where the amount of the structural unit represented by the formula (1) in the polyamide 6 type polyamide (a) is less than 70 mol % based on all the constitutional components, there arise such problems as a decrease in the crystallization speed of the polyamide, a decrease in the film formability, an increase in the dependency of the physical properties on humidity, a decrease in the resistance thereof to water and chemicals, and a loss of the shock resistance inherent in the polyamide.

In the present invention, the layer (B) is a layer made of a polyamide (b₁) obtained from a diamine comprising 70 mol % or more of meta-xylylenediamine and a dicarboxylic acid comprising 70 mol % or more of an α,ω-aliphatic dicarboxylic acid having 6 to 12 carbon atoms or a mixed polyamide (b₃) comprising 60 % by weight or more of the polyamide (b₁) and 40 % by weight or less of an aliphatic polyamide (b₂). The polyamide (b₁) is a polyamide, as described above, obtained from a diamine comprising 70 mol % or more of meta-xylylenediamine and a dicarboxylic acid comprising 70 mol % or more of an α,ω-aliphatic dicarboxylic acid having 6 to 12 carbon atoms.

Specific examples are polyamides obtained from meta-xylylenediamine and adipic acid (hereinafter sometimes referred to as "nylon MXD6" or "NMXD6"), copolymerized polyamides obtained from a mixed diamine of meta-xylylenediamine with para-xylylenediamine and adipic acid, polyamides obtained from meta-xylylenediamine and sebacic acid, polyamides obtained from meta-xylylenediamine, adipic acid, and isophthalic acid, and polyamides obtained from meta-xylylenediamine, adipic acid, terephthalic acid, and isophthalic acid.

With respect to the polyamide (b₁), if the amount of the meta-xylylenediamine in the diamine component is less than 70 mol %, since such problems arise that the crystallizability of the polyamide is lowered to lower the barrier ability against gaseous substances and liquid chemicals, and the dependency of physical properties on moisture is increased, the suitability as a film material is lowered.

Further, if the amount of the α,ω-aliphatic dicarboxylic acid having 6 to 12 carbon atoms in the dicarboxylic acid component to be used in the polyamide (b₁) is less than 70 mol %, for example, if the amount of the aromatic dicarboxylic acid exceeds 30 mol %, in some cases, the resulting polyamide involves disadvantages such as a decrease in the shock resistance and a decrease in the flowability during extrusion molding.

As the polyamide that constitutes the layer (B) of the present invention, a mixed polyamide (b₃) comprising 60 % by weight or more of the polyamide (b₁) and 40 % by weight or less of an aliphatic polyamide (b₂) can be used besides the above polyamide (b₁). Herein, the mixing proportion of the polyamide (b₁) in the mixed polyamide (b₃) is 60 % by weight or more, preferably 70 % by weight or more, and the mixing proportion of the aliphatic polyamide (b₂) is 40 % by weight or less, preferably 30 % by weight or less.

By "aliphatic polyamide (b₂)" is meant a polyamide having as the major structure a polyamide obtained from an aliphatic diamine and an aliphatic dicarboxylic acid. Specific examples of the polyamide (b₂) are nylon 6, nylon 66, nylon 46, and nylon 612.

If the mixing proportion of the polyamide (b₁) in the mixed polyamide (b₃) is less than 60 % by weight, the barrier ability of the layer (B) against gas or liquid chemicals is unfavorably lowered to weaken one of features of the multi-layer film as a packaging material.

The adhesive olefin layer (C) is a layer made of an adhesive polyolefin (c,) or a mixed resin (c₃) of the adhesive polyolefin (c₁) and a polyolefin (c₂).

As the adhesive polyolefin (c₁), can be used a polymer prepared from an olefin as the main monomer and its modification product. There are no particular restrictions on the adhesive polyolefin (c₁) so long as it is a thermoplastic polymer capable of adhesion both to the polyamide and to the polyolefin and for example use can be made of a polyethylene and polypropylene modified with maleic acid or maleic anhydride, a polyolefin copolymer modified, for example, with an acrylic type monomer or vinyl acetate, and a product which is obtained by modifying these polyolefin copolymer modification products with maleic acid or maleic anhydride. As the adhesive polyolefin layer (C), a mixed resin (c₃) can also be used. Herein, the mixed resin (c₃) is a mixed resin of the above adhesive polyolefin (c₁) and the polyolefin (c₂).

As the polyolefin (c₂), can be mentioned, for example, an olefin polymer of ethylene, propylene, butene, or the like and a copolymer of olefins.

As the polyolefin (d) constituting the layer (D), can be mentioned an olefin polymer of ethylene, propylene, butene, or the like and a copolymer of olefins.

The layer (E) is a layer made of an adhesive polyolefin (e₁) or a mixed resin (e₃) of said adhesive polyolefin (e₁) and a polyolefin (e₂).

As the adhesive polyolefin (e₁), can be used a polymer prepared from an olefin as the main monomer and its modification product. There are no particular restrictions on the adhesive polyolefin (e₁) so long as it is a thermoplastic polymer capable of adhesion both to the polyamide and to the polyolefin and for example use can be made of a polyethylene and polypropylene modified with maleic acid or maleic anhydride, a polyolefin copolymer modified, for example, with an acrylic type monomer or vinyl acetate, and a product which is obtained by modifying these polyolefin copolymer modification products with maleic acid or maleic anhydride.

As the polyolefin (e₂), can be mentioned, for example, an olefin polymer of ethylene, propylene, butene, or the like and a copolymer of olefins.

The layer structure of the multi-layer film of the present invention has multiple layers arranged in the order of (A)/(B)/(A)/(C)/(D) or (A)/(B)/(A)/(E) so that the layers (A) may be adjacent to both the surfaces of the layer (B). These multi-layer films are excellent in impact strength, gas barrier properties, heat-sealing strength. A moisture barrier effect can be obtained.

The thickness of the layer (A) of the multi-layer film of the present invention is 5 to 80 µm, preferably 8 to 60 µm. If the thickness of the layer (A) is less than 5 µm, the multi-layer film cannot exhibit satisfactory impact strength unfavorably. On the other hand, if the thickness of the layer (A) exceeds 80 µm, such problems arise such as a decrease in the flexibility of the film, an increase in the proportion of the thickness of the polyamide layer and hence marked changes in physical properties of the overall film due to the water absorption thereof, and a decrease in the thermoformability.

The thickness of the layer (B) is 5 to 50 µm, preferably 8 to 40 µm. If the thickness of the layer (B) is less than 5 µm, satisfactory gas barrier properties cannot be secured unsuitably. On the other hand, if the thickness of the layer (B) exceeds 50 µm, the proportion of the polyamide (B) low in impact strength is increased in the film to make it difficult to retain the impact resistance of the film at a high level, which is not suitable.

The thickness of the layer (C) is not particularly restricted so long as it is enough to secure the adhesion between the layer (B) or the inner layer (D) and the layer (D), and the thickness of the layer (C) is generally 1 to 40 µm, preferably 5 to 30 µm. Further, the thickness of the layer (D) can be arbitrarily set by taking the heat-sealing properties and the moisture barrier effect into account. The thickness of the layer (C) is generally 1 to 240 µm, preferably 5 to 240 µm, and particularly preferably 10 to 150 µm, but there are no problems if the thickness of the layer (C) is set to be over 240 µm.

The particulars relating to the thickness of the above layer (D) can apply to the thickness of the layer (E) as well.

The overall thickness of the multi-layer film of the present invention is 15 µm or more, preferably 20 µm or more, further preferably 20 to 250 µm, and particularly preferably 30 to 200 µm. If the thickness of the film is less than 15 µm, the thickness of each layer cannot be secured satisfactorily and therefore the film functions, i.e., certain levels of the impact resistance, the gas barrier properties, the interlayer adhesion, the heat-sealing properties, and the like as will be exhibited by the presence of the layers (A), the layer (B), the layer (C), and the layer (D) cannot be exhibited unsuitably.

The multi-layer film having the layer structure of the present invention can be produced by the coextrusion method or the extrusion coating method. The adoption of the coextrusion method and the extrusion coating method will distinctly develop the effect of enhancing the impact resistance according to the present invention. However, the adoption of other lamination method will not eliminate the effect of the present invention and other lamination method, such as dry lamination, can be used as a method of producing the multi-layer film having the layer structure of the present invention.

The coextrusion is a method wherein a plurality of melted resins in layered states are joined within or outside dies of extruders to form a film or a sheet and includes the method called tandem lamination. By "extrusion coating method" is meant a method wherein a single-layer film or a multi-layer film in a melted state is laminated onto one surface or both surfaces of a previously formed film or sheet by the extrusion, coextrusion, or tandem lamination method.

According to the present invention, it becomes possible to obtain a multi-layer film excellent in impact strength and gas barrier properties from MX nylon and the obtainable multi-layer film is expected to be used widely as a packaging material, wherein impact resistance and gas barrier properties are required, for food, medicines, electronic components, ink, paint, adhesives, etc.

The present invention will be more specifically described below with reference to Examples and Comparative Examples, wherein the physical properties and the like are evaluated according to the following methods:

### (1) Impact resistance (impact strength)

The impact resistance was measured in accordance with ASTM D781.

A puncture tester (PMI puncture tester manufactured by Toyo Seiki Co., Ltd.) was used and measurement conditions having a temperature of 23 °C and a relative humidity of 50 % were used.

### (2) Oxygen permeability

The oxygen permeability was measured in accordance with ASTM D3985.

An OXTRAN 10/50A manufactured by Modern Controls, Inc. was used and measurement conditions having a temperature of 23 °C and a relative humidity of 60 % were used.

### Example 1 (not within the scope of the invention)

Nylon 6 (that would constitute a layer A, was sometimes referred to as N-6, and was manufactured by Ube Industries, Ltd. under the trade name of Ube Nylon 1030B), nylon MXD6 (that would constitute a layer B and was manufactured by Mitsubishi Gas Chemical Co., Inc. under the trade name of MX nylon 6007), an adhesive polyethylene (that would constitute a layer C and was manufactured by Mitsui Petrochemical Industries, Ltd. under the trade name of ADMER NF300), and a low-density straight-chain polyethylene (that would constitute a layer D and was manufactured by Mitsui Petrochemical Industries, Ltd. under the trade name of Ultzex 2022L) were extruded respectively from an extruder having a cylinder diameter of 40 mm, an extruder having a cylinder diameter of 30 mm, an extruder having a cylinder diameter of 40 mm, and an extruder having a cylinder diameter of 45 mm to form a multi-layer melted state through a feed block so that the layer structure might be in the order of a layer A/layer B/layer C/layer D, and a multi-layer film was produced by the T die chill roll method (coextrusion method).

The layer structure, the thickness, and the values of the film impact strength and the oxygen permeability of the thus produced multi-layer film are shown in Table 1.

### Comparative Example 1

A low-density straight-chain polyethylene (that was sometimes referred to as LLDPE and was manufactured by Mitsui Petrochemical Industries, Ltd. under the trade name of Ultzex 2022L), an adhesive polyethylene (manufactured by Mitsui Petrochemical Industries, Ltd. under the trade name of ADMER NF300), and NMXD6 (manufactured by Mitsubishi Gas Chemical Co., Ltd. under the trade name of MX nylon 6007) were coextruded respectively from an extruder having a cylinder diameter of 45 mm, an extruder having a cylinder diameter of 30 mm, and an extruder having a cylinder diameter of 30 mm to form a multi-layer melted state through a feed block and a multi-layer film wherein the intermediate layer was in contact with an NMXD6 layer and the NMXD6 layer was in contact with an adhesive polyethylene layer was produced by the T die chill roll method (coextrusion method). The thicknesses of the thus formed respective layers were such that the LLDPE/adhesive/NMXD6/adhesive/LLDPE layers were 25/10/10/10/25 (µm) in thickness and the overall thickness was 80 µm.

The impact strength and the oxygen permeability of the resulting film were unsatisfactorily 11 kg•cm and 11 cc/m²-day-atm respectively.

### Examples 2 to 8 (not within the scope of the invention) and Comparative Examples 2 to 5

Using the same apparatuses as in Example 1, substantially the same procedure as in Example 1 was repeated, except that, instead of the NMXD6 of the layer B, blend materials of NMXD6 (that was the same as that used in Example 1) with nylon 6 (that was the same as that used for the layer A in Example 1) were used, thereby producing, by coextrusion, multi-layer films having the layer structures, the blend ratios (weight ratios of NMXD6 to nylon 6), and the layer thicknesses as shown in Table 1. The impact strength and the oxygen permeability of the multi-layer film were measured.
The results are shown in Table 1.

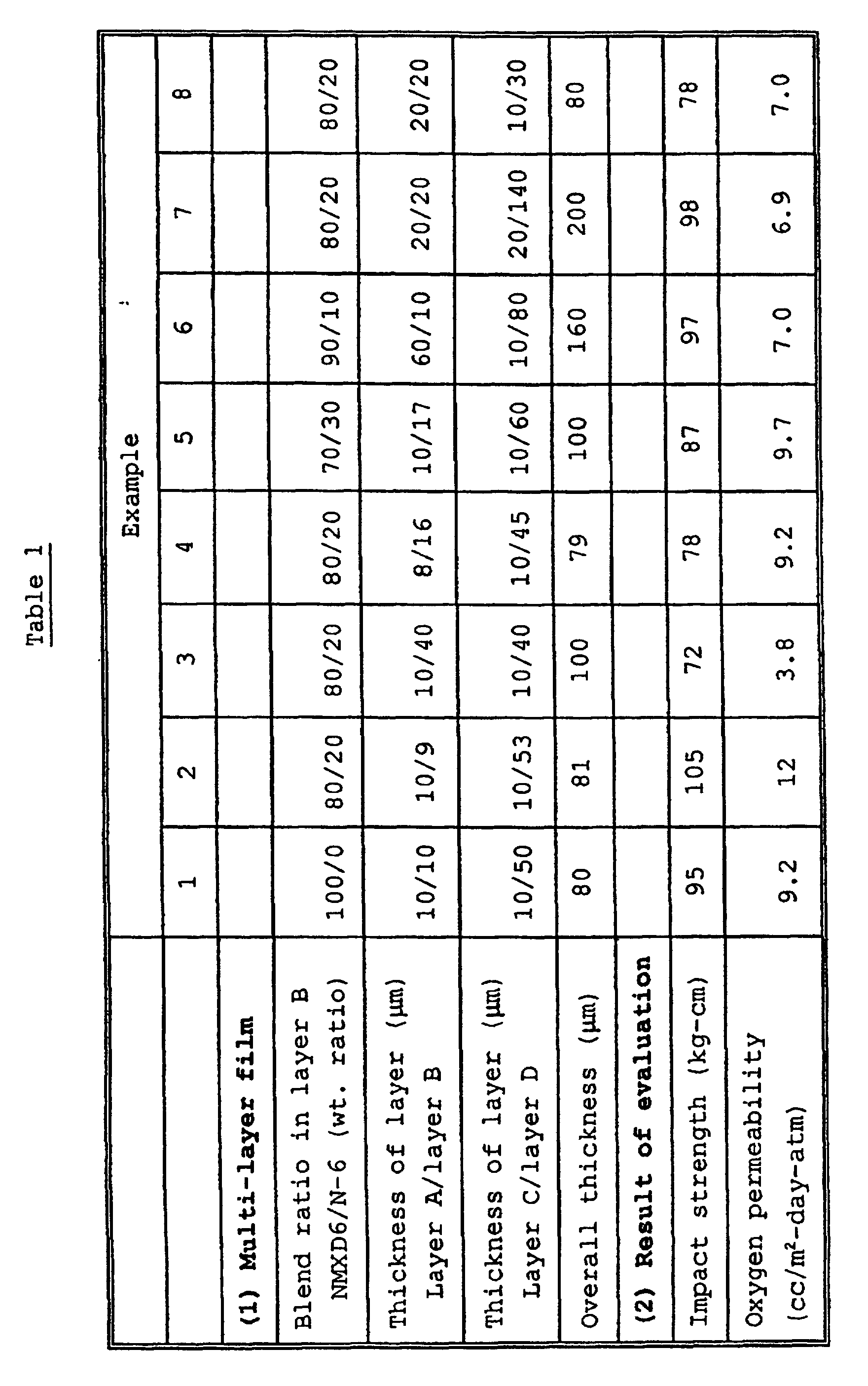

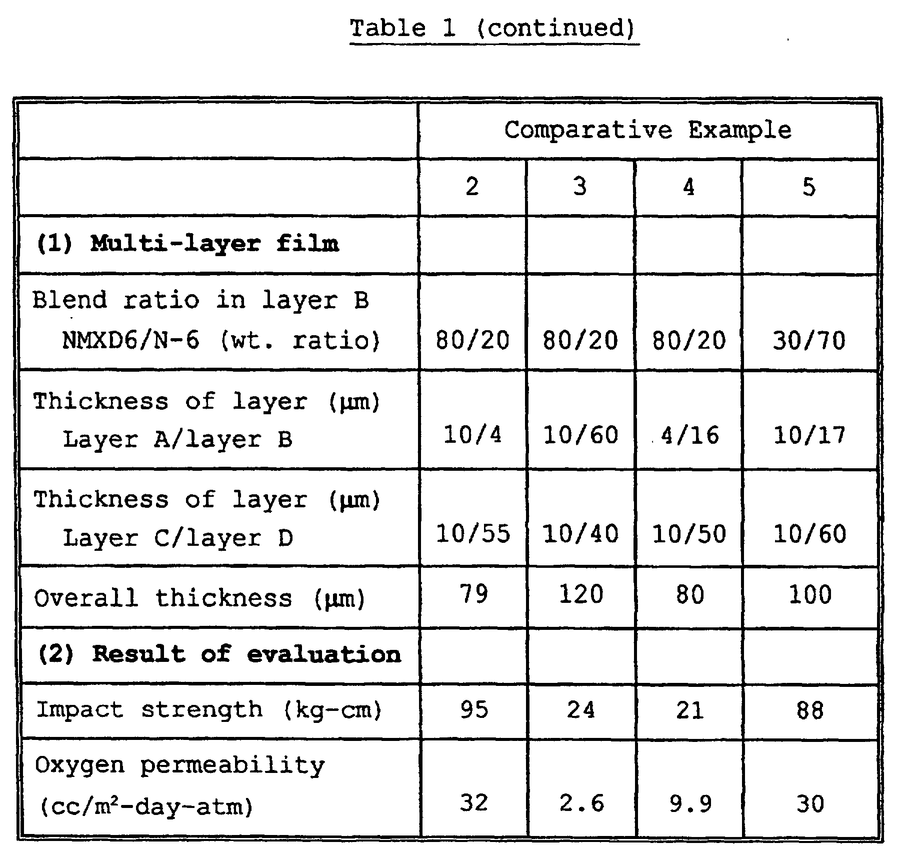

### Comparative Example 6

Using the same apparatuses and method as used in Example 1, Example 1 was repeated, except that the thickness of the nylon 6 layer was changed to 100 µm, thereby producing a multi-layer film having the same layer structure as in Example 1 by coextrusion.

The thermoformability of the film by a vacuum forming machine (manufactured by Asano Laboratories, Inc.; type: FKO-431-10; mold (container) shape: tray) was poor, and, as shown in Table 2 below, satisfactory containers were could not be obtained.

**Table 2**

| Film | Film surface temperature during vacuum forming | Thermoformability |
|---|---|---|
| Example 1 | 105 (°C) | good (bottom of tray was shaped satisfactorily) |
| Comparative Example 6 | 100 | poor (bottom of tray was shaped unsatisfactorily) |
| | 105 | poor (bottom of tray was shaped unsatisfactorily) |
| | 110 | poor (bottom of tray was shaped unsatisfactorily) |
| | 115 | poor (bottom of tray was shaped unsatisfactorily) |

The dimensions of the used mold (mm): 90 x 255 x 30

### Example 6 (not within the scope of the invention)

Nylon 6 (that would constitute a layer A and was manufactured by Ube Industries, Ltd. under the trade name of Ube nylon 1030B), NMXD6 (that would constitute a layer B and was manufactured by Mitsui Gas Chemical Co., Ltd. under the trade name of MX nylon 6121), and a mixture (that would constitute an E layer) of an adhesive polyethylene (manufactured by Mitsui Petrochemical Industries, Ltd. under the trade name of ADMER NF-300) with a low-density straight-chain polyethylene (manufactured by Mitsui Petrochemical Industries under the trade name of Ultzex 2022L) with the mixing weight ratio being 90/10 were extruded from an extruder having a cylinder diameter of 40 mm, an extruder having a cylinder diameter of 30 mm, and an extruder having a cylinder diameter of 40 mm, respectively, and were formed into a multi-layer film having a layer structure in the order of a layer A/layer B/layer E by the inflation method (coextrusion method) using a cylindrical multi-layer die. The thicknesses of the layer A, the layer B, and the layer E were 30 µm, 10 µm, and 60 µm, respectively, and the overall thickness of the film was 100 µm. The impact strength of the film was 76 kg•cm and the oxygen permeability was 7.7 cc/m²-day-atm.

## Claims

1. A multi-layer film, comprising layers arranged in the order of layer (A) / layer (B) / layer (A) /layer (C / layer (D), **characterized in that**:
each layer (A) is made of a polyamide 6-type polyamide (a) constituted by 70 to 100 mol% of a structural unit represented by the formula (I):
-(-NH-(CH₂)₅-CO-)- (1),
the layer (B) is made of a polyamide (b1) obtained from a diamine comprising 70 mol% or more of m-xylylenediamine and a dicarboxylic acid comprising 70 mol% or more of an α,ω-aliphatic dicarboxylic acid having 6 to 12 carbon atoms, or made of a mixed polyamide (b3) comprising 60% by weight or more of the polyamide (b1) and 40% by weight or less of an aliphatic polyamide (b2),
the layer (C) is made of an adhesive polyolefin (c1), or a mixed resin (c3) of the adhesive polyolefin (c1) and a polyolefin (c2), and
the layer (D) is made of a polyolefin (d), and further **characterized in that**:
the thickness of each layer (A) is 5 to 80 µm, the thickness of the layer (B) is 5 to 50 µm, and
the overall thickness of the multi-layer film is 15 µm or more.

2. The multi-layer film as claimed in claim 1, wherein the polyamide (b1) is obtained from m-xylylenediamine and adipic acid.

3. The multi-layer film as claimed in claim 1 or 2, wherein the multi-layer film is formed by coextrusion or extrusion coating.

4. A multi-layer film comprising layers arranged in the order of
layer (A) / layer (B) / layer (A) / layer (E), **characterized in that**:
each layer (A) is made of a polyamide 6-type polyamide (a) constituted by 70 to 100 mol% of a structural unit represented by the formula (1):
-(-NH-(CH₂)₅-CO-)- (1),
the layer (B) is made of a polyamide (b1) obtained from a diamine comprising 70 mol% or more of m-xylylenedlamine and a dicarboxyllc acid comprising 70 mol% or more of an α,ω-aliphatic dicarboxylic acid having 6 to 12 carbon atoms, or made of a mixed polyamide (b3) comprising 60% by weight or more of the polyamide (b1) and 40% by weight or less of an allphatic polyamide (b2), and the layer (E) is made of an adhesive polyolefin (e1), or a mixed resin (e3) of the adhesive polyolefin (e1) and a polyolefin (e2), and further **characterized in that**:
the thickness of each layer (A) is 5 to 80 µm, the thickness of the layer (B) is 5 to 50 µm, and
the overall thickness of the multi-layer film is 15 µm or more.

5. The multi-layer film as claimed In claim 4, wherein the polyamide (b1) is obtained from m-xylylenediamine and adipic acid.

6. The multi-layer film as claimed in claim 4 or 5, wherein the multi-layer film is formed by extrusion or extrusion coating.

## Patentansprüche

1. Mehrschicht-Film, umfassend in der Reihenfolge Schicht (A) /Schicht (B) / Schicht (A) / Schicht (C) / Schicht (D) angeordnete Schichten, dadurch charakterisiert, dass:
jede Schicht (A) aus einem Polyamid (a) vom Polyamid-6-Typ hergestellt ist, das aus 70 bis 100 mol % einer durch die Formel (I) dargestellten strukturellen Einheit gebildet wird:
-(-NH-(CH₂)₅-CO-)- (I),
die Schicht (B) aus einem Polyamid (b₁) hergestellt wird, das erhalten wird aus einem Diamin, welches 70 mol % oder mehr m-Xylylendiamin umfasst, und einer Dicarbonsäure, die 70 Mol % oder mehr einer aliphatischen α,ω-Dicarbonsäure mit 6 bis 12 Kohlenstoffatomen umfasst, oder aus einem Mischpolyamid (b3), welches 60 Gew.- % oder mehr des Polyamids (b₁) und 40 Gew.-% oder weniger eines aliphatischen Polyamids (b₂) umfasst,
die Schicht ( C) aus einem adhäsiven Polyolefin (c₁) oder einem Mischharz (c₃) aus dem adhäsiven Polyolefin (c₁) und einem Polyolefin (c₂) hergestellt ist, und
die Schicht (D) aus einem Polyolefin (d) hergestellt ist, und weiter dadurch charakterisiert, dass
die Dicke jeder Schicht (A) 5 bis 80 µm beträgt, die Dicke der Schicht (B) 5 bis 50 µm beträgt und die Gesamtdicke des Mehrschicht-Films 15 µm oder mehr beträgt.

2. Der Mehrschicht-Film wie in Anspruch 1 beansprucht, wobei das Polyamid (b₁) aus m-Xylylendiamin und Adipinsäure erhalten wird.

3. Der Mehrschicht-Film wie in Anspruch 1 oder 2 beansprucht, wobei der Mehrschicht-Film durch Coextrusion oder Extrusionsbeschichtung gebildet wird.

4. Mehrschicht-Film, umfassend in der Reihenfolge Schicht (A) /Schicht (B) / Schicht (A) / Schicht (E) angeordnete Schichten, dadurch charakterisiert, dass
jede Schicht (A) aus einem Polyamid (a) vom Polyamid-6-Typ hergestellt wird, das aus 70 bis 100 mol % einer durch die Formel (I) dargestellten strukturellen Einheit gebildet wird:
-(-NH-(CH₂)₅-CO-)- (I),
die Schicht (B) aus einem Polyamid (b₁) hergestellt wird, das erhalten wir aus einem Diamin, umfassend 70 mol % oder mehr m-Xylylendiamin, und einer Dicarbonsäure, umfassend 70 mol % oder mehr einer aliphatischen α,ω-Dicarbonsäure mit 6 bis 12 Kohlenstoffatomen, oder aus einem Mischpolyamid (b₃), umfassend 60 Gew.-% oder mehr des Polyamids (b₁) und 40 Gew.-% oder weniger eines aliphatischen Polyamids (b₂), und die Schicht (E) aus einem adhäsiven Polyolefin (e₁) hergestellt wird, oder aus einem Mischharz (e₃) aus dem adhäsiven Polyolefin (e₁) und einem Polyolefin (e₂), und weiter dadurch charakterisiert, dass
die Dicke jeder Schicht (A) 5 bis 80 µm betragt, die Dicke der Schicht (B) 5 bis 50 µm betragt, und die Gesamtdicke des Mehrschicht-Films 15 µm oder mehr betragt.

5. Mehrschicht-Film wie in Anspruch 4 beansprucht, wobei das Polyamid (b₁) aus m-Xylylendiamin and Adipinsäure erhalten wird.

6. Mehrschicht-Film wie in Anspruch 4 oder 5 beansprucht, wobei der Mehrschicht-Film durch Extrusion oder Extrusionsbeschichtung gebildet wird.

## Revendications

1. Film multicouche comprenant des couches disposées dans l'ordre couche (A)/couche (B)/couche (A)/couche (C)/couche (D) **caractérisé en ce que**:
chaque couche (A) est faite d'un polyamide (a) du type polyamide 6 constitué de 70 à 100% en moles d'un motif structurel représenté par la formule (1):
-(-NH-(CH₂)₅-CO- (1)
la couche (B) est faite d'un polyamide (b1) obtenu à partir d'une diamine comprenant 70% en moles ou plus de méta-xylylènediamine et d'un acide dicarboxylique comprenant 70% en moles ou plus d'un α,ω-acide dicarboxylique aliphatique ayant 6 à 12 atomes de carbone ou fait d'un polyamide mélangé (b3) comprenant 60% en poids ou plus du polyamide (b1) et 40% en poids ou moins d'un polyamide aliphatique (b2),
la couche (C) est faite d'une polyoléfine adhésive (c1) ou d'une résine mélangée (c3) de la polyoléfine adhésive (c1) et d'une polyoléfine (c2),
la couche (D) est faite d'une polyoléfine (d), caractérisé de plus **en ce que** l'épaisseur de chaque couche (A) est de 5 à 80 µm, l'épaisseur de la couche (B) est de 5 à 50 µm, et l'épaisseur totale dudit film multicouche est supérieure ou égale à 15 µm.

2. Film multicouche selon la revendication 1, dans lequel on obtient le polyamide (b1) à partir de m-xylylènediamine et d'acide adipique.

3. Film multicouche selon l'une des revendications 1 ou 2, dans lequel le film multicouche est formé au moyen d'une coextrusion ou par revêtement d'une extrusion.

4. Film multicouche comprenant des couches disposées dans l'ordre couche (A)/couche (B)/couche (A)/couche (E) **caractérisé en ce que**:
chaque couche (A) est faite d'un polyamide (a) du type polyamide 6 constitué de 70 à 100% en moles d'un motif structurel représenté par la formule (1):
-(-NH-(CH₂)₅-CO- (1)
la couche (B) est faite d'un polyamide (b1) obtenu à partir d'une diamine comprenant 70% en moles ou plus de métaxylylènediamine et d'un acide dicarboxylique comprenant 70% en moles ou plus d'un α,ω-acide dicarboxylique aliphatique ayant 6 à 12 atomes de carbone ou fait d'un polyamide mélangé (b3) comprenant 60% en poids ou plus du polyamide (b1) et 40% en poids ou moins d'un polyamide aliphatique (b2),
et la couche (E) est faite d'une polyoléfine adhésive (e1) ou d'une résine mélangée (e3) de la polyoléfine adhésive (e1) et d'une polyoléfine (e2), caractérisé de plus **en ce que** l'épaisseur de chaque couche (A) est de 5 à 80 µm, l'épaisseur de la couche (B) est de 5 à 50 µm, et l'épaisseur totale dudit film multicouche est supérieure ou égale à 15 µm.

5. Film multicouche selon la revendication 4, dans lequel on obtient le polyamide (b1) à partir de m-xylylènediamine et d'acide adipique.

6. Film multicouche selon la revendication 4 ou 5, dans lequel le film multicouche est formé par une extrusion ou par revêtement d'une extrusion.
